# EUROPÄISCHE PATENTSCHRIFT

(11) **EP 1 178 901 B1**
(45) Veröffentlichungstag und Bekanntmachung des Hinweises auf die Patenterteilung: **14.08.2002**
(21) Anmeldenummer: 00908952.5
(22) Anmeldetag: 27.01.2000
(51) Int. Cl.: B60Q 5/00, G10K 9/04, G10K 11/22

(54) **SCHALLÜBERTRAGUNGSVORRICHTUNG FÜR EIN KRAFTFAHRZEUG**
SOUND TRANSMISSION DEVICE FOR A MOTOR VEHICLE
DISPOSITIF DE TRANSMISSION SONORE POUR UN VEHICULE AUTOMOBILE

(30) Priorität: 14.05.1999 DE 19922216
(43) Veröffentlichungstag der Anmeldung: 13.02.2002
(73) Patentinhaber: MAHLE Filtersysteme GmbH, 70376 Stuttgart (DE); Bayerische Motoren Werke Aktiengesellschaft, 80809 München (DE)
(72) Erfinder: WALTER, Norbert, D-67067 Ludwigshafen (DE); HELGET, Manfred, D-70437 Stuttgart (DE); GOKELER, Thomas, D-70376 Stuttgart (DE); HOFFMANN, Reinhard, D-80993 München (DE); LINDNER, Udo, D-85757 Karlsfeld (DE)
(74) Vertreter: Patentanwalts-Partnerschaft Rotermund + Pfusch
(86) Internationale Anmeldenummer: DE0000258
(87) Internationale Veröffentlichungsnummer: WO0069680

(56) Entgegenhaltungen:
- DE-C- 180 849
- DE-C- 4 233 252
- FR-A- 642 008

## Beschreibung

Die Erfindung betrifft eine Vorrichtung zur gezielten Schallübertragung von einem Ansaugtrakt einer Brennkraftmaschine eines Kraftfahrzeuges zu einem Innenraum des Kraftfahrzeuges mit den Merkmalen des Oberbegriffes des Anspruches 1.

Aus der DE 42 33 252 C1 ist eine derartige Schallübertragungsvorrichtung bekannt, bei der ein hohler Übertragungskörper, der durch ein Rohr gebildet ist, eingangsseitig mit dem Ansaugtrakt der Brennkraftmaschine kommunizierend verbunden ist. Ausgangsseitig weist der als Rohr ausgebildete Übertragungskörper eine Membrane auf, die es bei der bekannten Schallübertragungsvorrichtung dem Übertragungskörper ermöglicht, ausgangsseitig Schall zum Fahrzeuginnenraum abzustrahlen. Die mit einer derartigen Schallübertragungsvorrichtung erzielbare Schallabstrahlungsleistung ist relativ gering, so daß es erforderlich ist, das die Membran aufweisende, ausgangsseitige Übertragungsrohrende durch eine vordere Querwand bzw. Stirnwand oder Spritzwand des Fahrzeuges hindurchzuführen, die den Fahrzeuginnenraum von einem die Brennkraftmaschine enthaltenden Motorraum trennt. Das Übertragungsrohr kann somit durch die Membran direkt in den Fahrzeuginnenraum abstrahlen, um den gewünschten Geräuscheffekt im Fahrzeuginnenraum zu erzielen. Die Montage der bekannten Schallübertragungsvorrichtung in einem Fahrzeug ist somit relativ aufwendig.

Die vorliegende Erfindung beschäftigt sich mit dem Problem, für eine Schallübertragungsvorrichtung der eingangs genannten Art eine Ausführungsform anzugeben, die eine verbesserte Schallabstrahlungsleistung aufweist.

Dieses Problem wird erfindungsgemäß durch eine Schallübertragungsvorrichtung mit den Merkmalen des Anspruches 1 gelöst.

Die Erfindung beruht auf dem allgemeinen Gedanken, durch eine wesentliche Querschnittserweiterung innerhalb des Schallweges im Übertragungskörper einen Resonator auszubilden, der in einer gewünschten Frequenz bzw. in einem gewünschten Frequenzband eine Resonanzwirkung zeigt. Durch diese Resonanz kann innerhalb des gewünschten Frequenzbereiches Schallenergie aus dem Ansaugtrakt absorbiert und durch den Resonator dem Fahrzeuginnenraum zugeleitet werden. Die Abstrahlungsleistung der Schallübertragungsvorrichtung wird somit verbessert.

Entsprechend einer bevorzugten Ausführungsform kann ein Leitungsabschnitt des Übertragungskörpers als λ/2-Resonator ausgebildet sein, wobei die Ausgangsseite dieses Leitungsabschnittes mit einer Membran verschlossen ist. Auf diese Weise werden zwei Resonatoren hintereinander geschaltet, wodurch sich die aus dem Ansaugtrakt entnehmbare und zum Fahrzeuginnenraum hin abstrahlbare Schalleistung vergrößert. Eine Bauweise mit einem solchen λ/2-Resonator ist jedoch dann von Nachteil, wenn relativ niedrige Frequenzen besonders intensiv abgestrahlt werden sollen. Beispielsweise wird bei einem sportlichen Fahrzeug eine akustische Rückkopplung im Bereich von etwa 250 Hz vom Fahrzeugführer als besonders angenehm empfunden. Die Länge des λ/2-Resonators muß dann bei einer Schallgeschwindigkeit von ca. 300 m/s etwa 1,20 m betragen. Es bedarf daher eines relativ großen Aufwandes, einen als λ/2-Resonator ausgebildeten Leitungsabschnitt im Motorraum unterzubringen, da im Motorraum üblicherweise nur wenig Bauraum zur Verfügung steht.

Eine entscheidende Verbesserung ergibt sich bei einer alternativen Weiterbildung, bei welcher ein Kammerabschnitt des Übertragungskörpers eine Membran aufweist, die im Kammerabschnitt eine mit dem Leitungsabschnitt kommunizierende erste Kammer begrenzt. Durch diese Merkmale ist es möglich, den Resonator als sogenannten "Helmholtz-Resonator" auszubilden. bei einem solchen Helmholtz-Resonator wirkt das in der ersten Kammer eingeschlossene Luftvolumen akustisch als "Feder", während der Leitungsabschnitt akustisch als "Masse" wirkt, welche die erste Kammer an das Schallfeld des Ansaugtraktes ankoppelt. Auf diese Weise entsteht ein schwingungsfähiges Feder-Masse-Resonanzsystem, das bei Schallanregung im Bereich der Resonanzfrequenz besonders stark mitschwingt, wodurch es möglich ist, in diesem Resonanzbereich eine besonders hohe Abstrahlungsenergie aus dem Schallfeld herauszuziehen und durch den Resonator zum Fahrzeuginnenraum hin abzustrahlen. Eine besonders vorteilhafte Ausführungsform ergibt sich dann, wenn der Leitungsabschnitt relativ kurz ausgebildet ist, so daß das Volumen des Leitunqsabschnittes wesentlich kleiner ist als das Volumen der ersten Kammer. Das Resonanzverhalten des Helmholtz-Resonators wird durch diese Maßnahme verbessert.

Die Ausgestaltung des durch die Querschnittserweiterung ausgebildeten Resonators als Helmholtz-Resonator bewirkt eine so hohe Leistungssteigerung, daß ein Durchbruch durch die Stirnwand des Fahrzeuges und der damit zusammenhängende Montageaufwand in der Regel unterbleiben kann.

Von besonderem Vorteil ist es, wenn die Membran den Übertragungskörper ausgangsseitig luftdicht verschließt, so daß es möglich ist, den Übertragungskörper eingangsseitig an die Reinseite des Ansaugtraktes anzuschließen. Dabei wird die Eingangsseite des Übertragungskörpers bzw. des Leitungsabschnittes vorzugsweise an die Reinseite eines Luftfilters des Ansaugtraktes oder an einen Luftsammelbehälter, von dem aus die Ansaugluft auf die einzelnen Zylinder der Brennkraftmaschine verteilt wird, oder an eine den Luftfilter mit dem Luftsammelbehälter verbindende Verbindungsleitung angeschlossen.

Um die Schallabstrahlung einer bestimmten Frequenz bzw. eines bestimmten Frequenzbandes zu verbessern, kann der Kammerabschnitt an seiner Ausgangsseite einen Rohrabschnitt aufweisen, dessen Rohrquerschnitt kleiner als der Kammerquerschnitt ist, wobei die Membran im Kammerabschnitt eine mit dem Rohrabschnitt kommunizierende zweite Kammer begrenzt. Durch diese Maßnahme wird das so gebildete Resonanzsystem beeinflußt, wodurch höherfrequente Schwingungen absorbiert werden können. Durch eine geeignete Wahl des Volumens der ersten Kammer relativ zum Volumen der zweiten Kammer kann das Übertragungsverhalten des Resonanzsystems eingestellt werden. Maßnahmen zur Dämpfung des Resonanzsystems können z.B. darin bestehen, daß im Rohrabschnitt eine Blende mit einem Blendenquerschnitt angeordnet ist, wobei der Blendenquerschnitt kleiner als der Rohrquerschnitt ist. Durch die Wahl des Blendenquerschnittes kann die Bedämpfung des Resonanzsystems beeinflußt werden. Außerdem kann der Rohrabschnitt an seinem Austritt als sich erweiternder Trichter od.dgl. ausgebildet sein, wodurch auch hier eine Verbesserung der abgestrahlten Schalleistung erzielt wird. Durch gezielte Auswahl der Membran, z.B. hinsichtlich Steifigkeit, Masse, Größe und/oder Form, kann das Übertragungsverhalten des Resonanzsystems ebenfalls beeinflußt werden.

Weitere wichtige Merkmale und Vorteile der erfindungsgemäßen Schallübertragungsvorrichtung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Es zeigen, jeweils schematisch,
- Fig. 1: eine Prinzipdarstellung eines Ansaugtraktes einer Brennkraftmaschine,
- Fig. 2: eine Prinzipdarstellung einer ersten Ausführungsform einer Schallübertragungsvorrichtung nach der Erfindung und
- Fig. 3: eine Prinzipdarstellung einer zweiten Ausführungsform der erfindungsgemäßen Schallübertragungsvorrichtung.

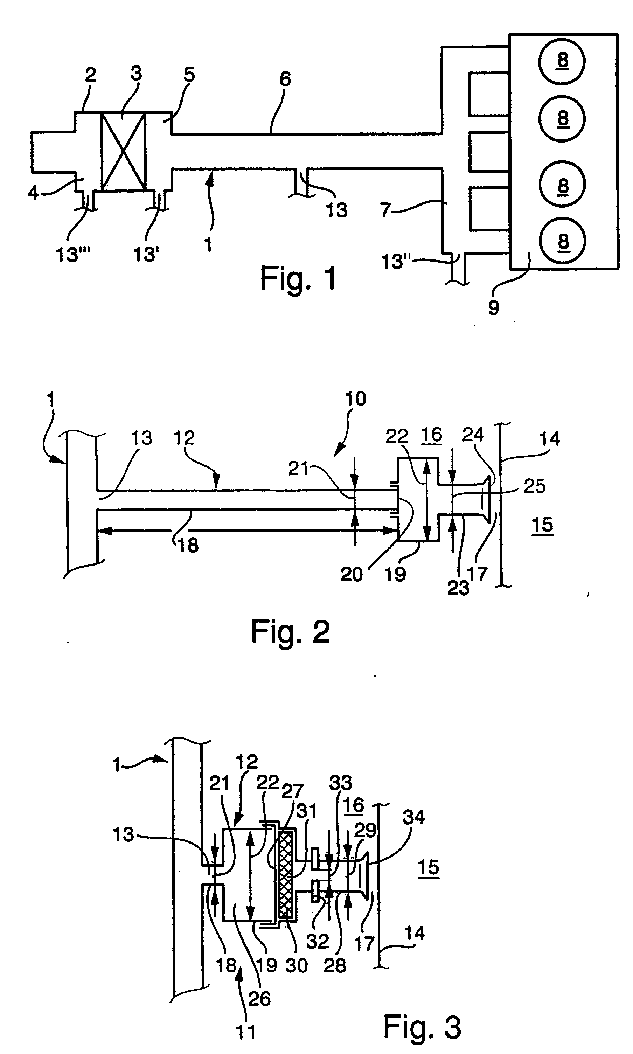

Entsprechend Fig. 1 weist ein Luftansaugtrakt 1 einer Brennkraftmaschine 9 ein Luftfilter 2 auf, in dem ein Filterelement 3 eine Rohseite 4 von einer Reinseite 5 trennt. Eine Verbindungsleitung 6, die beispielsweise durch einen Schlauch gebildet sein kann, verbindet das Luftfilter 2 mit einem Luftsammler 7, der die angesaugte Frischluft auf .einzelne Zylinder 8 der Brennkraftmaschine 9 verteilt. Innerhalb dieses Luftansaugtraktes 1 ist während des Betriebes der Brennkraftmaschine 9 ein Schallfeld ausgebildet, dessen Klang- oder Geräuschcharakteristik mit der von der Brennkraftmaschine 9 erbrachten Leistung, insbesondere mit deren Drehzahl, korreliert. Um den Fahrzeuginsassen, vor allem dem Fahrzeugführer, ein akustisches Feedback der Brennkraftmaschinentätigkeit zu liefern, verfügt das im übrigen nicht dargestellte Kraftfahrzeug, das insbesondere ein Personenkraftwagen, vorzugsweise ein Sportwagen ist, über eine in den Fig. 2 und 3 dargestellte Schallübertragungsvorrichtung 10 (Ausführungsform gemäß Fig. 2) bzw. 11 (Ausführungsform gemäß Fig. 3).

Entsprechend den Fig. 2 und 3 weist eine der artige Schallübertragungsvorrichtung 10,11 einen Übertragungskörper 12 auf, der eingangsseitig bei 13 mit dem Ansaugtrakt 1 kommunizierend verbunden ist.

Entsprechend Fig. 1 wird die Schallübertragungsvorrichtung 10,11 mit ihrer Eingangsseite 13 vorzugsweise an die Verbindungsleitung 6 des Ansaugtraktes 1 angeschlossen. Ebenso sind Ausführungsformen möglich, bei denen die Eingangsseite 13' mit der Reinseite 5 des Luftfilters 2 verbunden ist. Bei manchen Fahrzeugtypen kann es vorteilhaft sein, die Eingangsseite 13" an den Luftsammler 7 anzuschließen. Bei einer anderen Ausführungsform kann die Eingangsseite 13"' mit der Rohseite 4 des Luftfilters 2 verbunden sein. Bei den Ausführungsformen, bei welchen die Schallübertragungsvorrichtung 10,11 mit der Reinseite des Luftansaugtraktes 1 kommuniziert, ist darauf zu achten, daß die Schallübertragungsvorrichtung 10,11 nach außen luftdicht ausgebildet ist.

Entsprechend den Fig. 2 und 3 endet die Luftansaugvorrichtung 10,11 an einer mit 17 gekennzeichneten Ausgangsseite unmittelbar vor einer Trennwand 14, die im Fahrzeug einen Fahrzeuginnenraum 15 von einem die Brennkraftmaschine 9 enthaltenden Motorraum 16 trennt. Ebenso kann die Ausgangsseite 17 so dicht an diese Trennwand 14, die auch als "Stirnwand" oder "Spritzwand" bezeichnet wird, herangeführt sein, daß die Ausgangsseite 17 mit der Trennwand 14 in Kontakt und/oder daran fixiert ist. Auch ist es möglich, für die Ausgangsseite 17 der Schallübertragungsvorrichtung 10 bzw. 11 einen Durchbruch in der Trennwand 14 auszubilden, um die Schallabstrahlung in den Fahrzeuginnenraum 15 zu verbessern. Die Trennwand 14 kann bei einer anderen Ausführungsform auch durch ein nicht dargestelltes Gehäuse eines Frischluftfilters gebildet sein, durch den eine Klimatisierungseinrichtung des Fahrzeuges Frischluft in den Fahrzeuginnenraum 15 ansaugt. Insoweit kann der diese Trennwand 14 durchdringende Schall ohne weiteres in den Fahrzeuginnenraum 15 eintreten.

Der Übertragungskörper 12 besteht aus einem Leitungsabschnitt 18 und aus einem Kammerabschnitt 19. Der Leitungsabschnitt 18 kommuniziert eingangsseitig mit dem Ansaugtrakt 1 und ist ausgangsseitig mit einem Eingang des Kammerabschnittes 19 verbunden. Ein Ausgang des Kammerabschnittes 19 bildet die Ausgangsseite 17 der Schallübertragungsvorrichtung 10,11.

Der Leitungsabschnitt 18 weist einen Leitungsquerschnitt 21 auf, während der Kammerabschnitt 19 einen Kammerquerschnitt 22 besitzt. Wie aus den Fig. 2 und 3 deutlich hervorgeht, ist der Kammerquerschnitt 22 erheblich größer ausgebildet als der Leitungsquerschnitt 21. Durch diese Maßnahme wirkt der Kammerabschnitt 19 als Resonator, der in seinem Resonanzbereich verstärkt Schwingungsenergie aus dem Leitungsabschnitt 18 entnimmt und an seinem Ausgang 17 zur Abstrahlung in den Innenraum 15 zur Verfügung stellt.

Entsprechend Fig. 2 ist der Leitungsabschnitt 18 bei einer ersten Ausführungsform im Bereich seiner Einmündung in den Kammerabschnitt 19 durch eine Membran 20 verschlossen. Sofern die Luftübertragungsvorrichtung 10 an die Reinseite des Ansaugtraktes 1 angeschlossen ist, ist diese Membran 20 luftdicht angebracht, um eine unzulässige Rohluftzuführung zur Brennkraftmaschine 9 zu vermeiden. Entsprechend Fig. 2 ist der Leitungsabschnitt 18 als sogenannter "λ/2-Resonator" ausgebildet, wobei die Länge des Leitungsabschnittes 18 zwischen seinen Enden etwa λ/2 entspricht, vgl. die Maßlinie in Fig. 2. Dabei spielt es keine Rolle, ob der Leitungsabschnitt 18 wie in Fig. 2 einen geradlinigen oder einen gebogenen Verlauf hat. Dementsprechend kann der Leitungsabschnitt 18 aus einem relativ steifen Rohr oder aus einem relativ flexiblen Schlauch gebildet sein. λ ist hierbei die Wellenlänge einer bevorzugten Frequenz bzw. die mittlere Wellenlänge eines bevorzugten Frequenzbereiches, die bzw. der in den Fahrzeuginnenraum 15 abgestrahlt werden soll.

Der vom λ/2-Resonator über die Membrane 20 in den im Kammerabschnitt 19 ausgebildeten Resonator abgestrahlte Schall wird im letztgenannten Resonator relativ breitbandig übertragen und tritt über einen Rohrabschnitt 23 am Austritt des Kammerabschnittes 19 aus dem Übertragungskörper 12 aus. Am Austritt des Rohrabschnittes 23 ist ein sich nach außen verbreiternder Schallaustritt 24 ausgebildet, der nach Art eines Trichters oder einer Austulpung geformt ist. Der Rohrabschnitt 23 weist einen Rohrquerschnitt 25 auf, der kleiner ist als der Kammerquerschnitt 22.

Entsprechend Fig. 3 ist bei der bevorzugten Variante der erfindungsgemäßen Schallübertragungsvorrichtung 11 der Leitungsabschnitt 18 relativ kurz ausgebildet, so daß das darin befindliche Luftvolumen wesentlich kleiner als das Luftvolumen einer ersten Kammer 26, die im Kammerabschnitt 19 durch eine Membran 27 ausgebildet ist. Die Membran 27 bewirkt auch hier vorzugsweise einen luftdichten Abschluß des Übertragungskörpers 12. Durch diese Ausgestaltungsform wird der Resonator als Helmholtz-Resonator ausgebildet, bei dem das Luftvolumen im Leitungsabschnitt 18 als "Masse" und das Luftvolumen der Kammer 26 als "Feder" wirken. Der so gebildete "Feder-Masse-Schwinger" weist ein bestimmtes berechenbares Resonanzverhalten auf. Durch die Membran 27, die eine elastische Wand der ersten Kammer 26 bildet, wird einerseits die Resonanzfrequenz dieses Helmholtz-Resonators beeinflußt, andererseits kann dadurch im Resonanzbereich die Schallenergie im Frequenzbereich der Resonanz aus dem Resonator abgezogen, weitergeleitet und an der Ausgangsseite 17 zum Fahrzeuginnenraum 15 hin abgestrahlt werden.

Um die von der Ausgangsseite 17 abgestrahlte Schallcharakteristik zu beeinflussen, sind verschiedene Maßnahmen möglich, die alternativ oder kumuliert anwendbar sind. Diese Maßnahmen bewirken dabei jeweils eine Bedämpfung des von der Membran 27 abgestrahlten Schalls und können daher als "Dämpfungsglieder" des vorgenannten Feder-Masse-Schwingers aufgefaßt werden.

Entsprechend der in Fig. 3 dargestellten Ausführungsform weist der Kammerabschnitt 19 einen Rohrabschnitt 28 mit einem Rohrquerschnitt 29 auf, der deutlich kleiner ist als der Kammerquerschnitt 22. Auf diese Weise trennt die Membran 27 im Kammerabschnitt 19 eine zweite Kammer 30 von der ersten Kammer 26 ab, die mit dem Rohrabschnitt 28 kommuniziert. Durch die Wahl des Verhältnisses zwischen den Volumina der beiden Kammern 26 und 30 kann die Dämpfungswirkung an der Membran 27 beeinflußt werden. In der zweiten Kammer 30 ist ein Dämpfungskörper 31 eingebracht, der beispielsweise aus einem offenporigen Schaumstoff gebildet ist. Ebenso ist es möglich, ein derartiges Dämpfungsmaterial im Rohrabschnitt 28 oder auch in der ersten Kammer 26 oder im Leitungsabschnitt 18 unterzubringen.

Im Rohrabschnitt 28 ist eine Blende 32 angebracht, deren Blendenquerschnitt 33 kleiner ist als der Rohrquerschnitt 29. Durch die Einstellung des Blendenquerschnitts 33 kann ebenfalls das akustische Verhalten des Resonanzsystems variiert werden. Schließlich ist auch hier ein Schallaustritt 34 trichterförmig oder tulpenförmig ausgebildet, um die Schallabstrahlung in gewünschter Weise zu beeinflussen.

Während die Membran 27 in Fig. 3 aus einem flexiblen, insbesondere gummielastischen Material besteht und umfangsseitig am Kammerabschnitt 19 fixiert ist, kann die Membran 27 auch aus einem relativ steifen Material bestehen, wobei dann die Einspannung bzw. Befestigung dieser Membran am Kammerabschnitt 19 entsprechend federelastisch erfolgt. Die Auswahl des Membranmaterials, deren Gestalt und Halterung erfolgen analog zu einer Membran bei einem Lautsprecher.

Entsprechend einer bevorzugten Ausführungsform ist der Leitungsabschnitt 18 zumindest in dem an den Kammerabschnitt 19 angeschlossenen Bereich kreiszylindrisch ausgebildet. Ebenso ist der Kammerabschnitt 19 vorzugsweise kreiszylindrich ausgebildet. Folgende Abmessungen haben sich in der Praxis bewährt: Leitungsquerschnitt 21: ca. 20 cm², Kammerquerschnitt 22: ca. 45 cm², Rohrquerschnitt 29: ca. 20 cm², Blendenquerschnitt 33: ca. 3 cm², Länge des Leitungsabschnittes 18: ca. 8 cm, Länge der ersten Kammer 26: ca. 8,5 cm, Länge der zweiten Kammer 30: ca. 5,4 cm, Länge des Rohrabschnittes 28: ca. 11,2 cm, Außendurchmesser des Schallaustrittes 34: ca. 7,5 cm.

Die Membran besteht vorzugsweise aus einem Elastomer, z.B. NBR/PVC, das insbesondere durch ein Gewebe, z.B. Polyamid 6.6, verstärkt sein kann.

## Patentansprüche

1. Vorrichtung zur gezielten Schallübertragung von einem Ansaugtrakt (1) einer Brennkraftmaschine (9) eines Kraftfahrzeuges zu einem Innenraum (15) des Kraftfahrzeuges, mit einem hohlen Übertragungskörper (12), der eingangsseitig (13) mit dem Ansaugtrakt (1) kommunizierend verbunden ist und ausgangsseitig (17) Schall zum Fahrzeuginnenraum (15) abstrahlt,
**dadurch gekennzeichnet,**
- **daß** der Übertragungskörper (12) einen Leitungsabschnitt (18) mit einem Leitungsquerschnitt (21) und einen Kammerabschnitt (19) mit einem Kammerquerschnitt (22) aufweist,
- **daß** der Kammerquerschnitt (22) größer ist als der Leitungsquerschnitt (21),
- **daß** der Leitungsabschnitt (18) eingangsseitig mit dem Ansaugtrakt (1) kommuniziert und ausgangsseitig in die Eingangsseite des Kammerabschnittes (19) einmündet und
- **daß** die Ausgangsseite des Kammerabschnittes (19) den Schall zum Fahrzeuginnenraum (15) abstrahlt.

2. Schallübertragungsvorrichtung nach Anspruch 1,
**dadurch gekennzeichnet,**
**daß** der Leitungsabschnitt (18) als λ/2-Resonator ausgebildet ist oder einen als λ/2-Resonator ausgebildeten Abschnitt aufweist, wobei eine Seite, vorzugsweise die Ausgangsseite, dieses λ/2-Resonators mit einer Membran (20) verschlossen ist.

3. Schallübertragungsvorrichtung nach Anspruch 1,
**dadurch gekennzeichnet,**
**daß** der Kammerabschnitt (19) eine Membran (27) aufweist, die im Kammerabschnitt (19) eine mit dem Leitungsabschnitt (13) kommunizierende erste Kammer (26) begrenzt.

4. Schallübertragungsvorrichtung nach Anspruch 3,
**dadurch gekennzeichnet,**
**daß** der Leitungsabschnitt (18) relativ kurz ausgebildet ist, so daß das Volumen des Leitungsabschnittes (18) wesentlich kleiner ist als das Volumen der ersten Kammer (26).

5. Schallübertragungsvorrichtung nach einem der vorhergehenden Ansprüche,
**dadurch gekennzeichnet,**
**daß** der Kammerquerschnitt (22) etwa 1,5- bis 4-mal größer ist als der Leitungsquerschnitt (21) eines daran angrenzenden Bereiches des Leitungsabschnittes (18).

6. Schallübertragungsvorrichtung nach einem der vorhergehenden Ansprüche,
**dadurch gekennzeichnet,**
**daß** der Kammerabschnitt (19) an seiner Ausgangsseite einen Rohrabschnitt (23;28) aufweist, dessen Rohrquerschnitt (25;29) kleiner ist als der Kammerquerschnitt (22).

7. Schallübertragungsvorrichtung nach Anspruch 6,
**dadurch gekennzeichnet,**
**daß** der Rohrabschnitt (23;28) an seinem Austritt (24;34) als sich erweiternder Trichter ausgeformt ist.

8. Schallübertragungsvorrichtung zumindest nach den Ansprüchen 3 und 6,
**dadurch gekennzeichnet,**
**daß** die Membran (27) im Kammerabschnitt (19) eine mit dem Rohrabschnitt (28) kommunizierende zweite Kammer (30) begrenzt.

9. Schallübertragungsvorrichtung zumindest nach Anspruch 6,
**dadurch gekennzeichnet,**
**daß** im Rohrabschnitt (28) eine Blende (32) mit einem Blendenquerschnitt (33) angeordnet ist, wobei der Blendenquerschnitt (33) kleiner ist als der Rohrquerschnitt (29).

10. Schallübertragungsvorrichtung nach einem der vorhergehenden Ansprüche,
**dadurch gekennzeichnet,**
**daß** im Leitungsabschnitt (18) und/oder im Kammerabschnitt (19) und/oder in der ersten Kammer (26) und/oder in der zweiten Kammer (30) und/oder im Rohrabschnitt (28) Dämpferelemente angeordnet sind.

11. Schallübertragungsvorrichtung zumindest nach Anspruch 3,
**dadurch gekennzeichnet,**
**daß** die Membran (27) aus einem gummielastischen Material besteht und an ihrem Umfang am Kammerabschnitt (19) befestigt ist.

12. Schallübertragungsvorrichtung zumindest nach Anspruch 3,
**dadurch gekennzeichnet,**
**daß** die Membran aus einem relativ steifen Material besteht und an ihrem Umfang federelastisch am Kammerabschnitt (19) gehaltert ist.

13. Schallübertragungsvorrichtung nach einem der vorhergehenden Ansprüche,
**dadurch gekennzeichnet,**
**daß** der Übertragungskörper (12) eingangsseitig an eine Reinseite des Ansaugtraktes (1) angeschlossen ist und daß der Übertragungskörper (12) nach außen luftdicht verschlossen ist.

## Claims

1. A device for controlled transmission of sound from an intake tract (1) of an internal combustion engine (9) of a motor vehicle to an interior (15) of the vehicle, with a hollow sound transmitting body (12) which communicates at the input end (13) with the intake tract (1), and at the output end (17) it radiates sound to the vehicle interior (15),
**characterized in that**
- the sound transmitting body (12) has a line section (18) with a line cross section (21) and a chamber section (19) with a chamber cross section (22),
- the chamber cross section (22) is larger than the line cross section (21),
- the line section (18) communicates at the input end with the intake tract (1) and at the output end it opens into the input end of the chamber section (19) and
- the output end of the chamber section (19) radiates sound toward the vehicle interior (15).

2. A sound transmission device according to Claim 1,
**characterized in that**
the line section (18) is designed as a λ/2 resonator or has a section designed as a λ/2 resonator, where one end, preferably the output end of this λ/2 resonator is sealed with a diaphragm (20).

3. A sound transmission device according to Claim 1,
**characterized in that**
the chamber section (19) has a diaphragm (27) bordering a first chamber (26) which communicates with the line section (13) in the chamber section (19).

4. A sound transmission device according to Claim 3,
**characterized in that**
the line section (18) is designed to be relatively short, so that the volume of the line section (18) is much smaller than the volume of the first chamber (26).

5. A sound transmission device according to one of the preceding claims,
**characterized in that**
the chamber cross section (22) is 1.5 to 4 times larger than the line cross section (21) of an adjacent area of the line section (18).

6. A sound transmission device according to one of the preceding claims,
**characterized in that**
the chamber section (18) has a tube section (23; 28) on its output end whose tube cross section (25; 29) is smaller than the chamber cross section (22).

7. A sound transmission device according to Claim 6,
**characterized in that**
the tube section (23; 28) is shaped as a widening funnel at its outlet (24; 34).

8. A sound transmission device at least according to Claims 3 and 6,
**characterized in that**
the diaphragm (27) in the chamber section (19) borders a second chamber (30) which communicates with the tube section (28).

9. A sound transmission device at least according to Claim 6,
**characterized in that**
a baffle (32) with a baffle cross section (33) is arranged in the tube section (28), where the baffle cross section (33) is smaller than the tube cross section (29).

10. A sound transmission device according to one of the preceding claims,
**characterized in that**
damping elements are arranged in the line section (18) and/or in the chamber section (19) and/or in the first chamber (26) and/or in the second chamber (30) and/or in the tube section (28).

11. A sound transmission device at least according to Claim 3,
**characterized in that**
the diaphragm (27) is made of a rubber elastic material and is attached at its periphery to the chamber section (19).

12. A sound transmission device at least according to Claim 3,
**characterized in that**
the diaphragm is made of a relatively stiff material and is secured to the chamber section (19) at its periphery in an elastic manner.

13. A sound transmission device according to one of the preceding claims,
**characterized in that**
the sound transmitting body (12) is connected at the input end to a clean end of the intake tract (1), and the sound transmitting body (12) is sealed airtight toward the outside.

## Revendications

1. Dispositif pour la transmission sonore rationnelle d'un circuit d'aspiration (1) d'un moteur à combustion interne (9) d'un véhicule automobile à un habitacle (15) du véhicule, comprenant un corps de transmission creux (12), qui est relié en communication côté entrée (13) avec le circuit d'aspiration (1) et rayonne côté sortie (17) du son en direction de l'habitacle (15) du véhicule,
**caractérisé en ce**
- **que** le corps de transmission (12) présente une partie conduite (18) présentant une section transversale (21) et une partie compartiment (19) présentant une section transversale (22),
- **que** la section transversale de compartiment (22) est supérieure à la section transversale de conduite (21),
- **que** la partie conduite (18) communique côté entrée avec le circuit d'aspiration (1) et débouche côté sortie dans le côté entrée de la partie compartiment (19), et
- **que** le côté sortie de la partie compartiment (19) rayonne le son en direction de l'habitacle (15) du véhicule.

2. Dispositif de transmission sonore suivant la revendication 1,
**caractérisé en ce**
**que** 1a partie conduite (18) est réalisée sous forme de résonateur λ/2 ou présente une section réalisée sous forme de résonateur λ/2, un côté, de préférence le côté sortie, de ce résonateur λ/2 étant fermé par une membrane (20).

3. Dispositif de transmission sonore suivant la revendication 1,
**caractérisé en ce**
**que** la partie compartiment (19) présente une membrane (27), qui délimite dans la partie compartiment (19) un premier compartiment (26) communiquant avec la partie conduite (13).

4. Dispositif de transmission sonore suivant la revendication 3,
**caractérisé en ce**
**que** la partie conduites (18) a une configuration relativement courte, de sorte que le volume de la partie conduite (18) est sensiblement inférieur au volume du premier compartiment (26).

5. Dispositif de transmission sonore suivant l'une des revendications précédentes,
**caractérisé en ce**
**que** la section transversale de compartiment (22) est environ 1,5 à 4 fois plus grande que la section transversale de conduite (21) d'une zone limitrophe de la partie conduite (18).

6. Dispositif de transmission sonore suivant l'une des revendications précédentes,
**caractérisé en ce**
**que** la partie compartiment (19) présente sur son côté sortie une section tubulaire (23 ; 28), dont la section transversale (25 ; 29) est inférieure à la section transversale de compartiment (22).

7. Dispositif de transmission sonore suivant la revendication 6,
**caractérisé en ce**
**que** la section tubulaire (23 ; 28) est conformée à sa sortie (24 ; 34) sous forme d'élargissement en entonnoir.

8. Dispositif de transmission sonore suivant au moins les revendications 3 et 6,
**caractérisé en ce**
**que** la membrane (27) délimite dans la partie compartiment (19) un second compartiment (30) communiquant avec la section tubulaire (28).

9. Dispositif de transmission sonore suivant au moins la revendication 6,
**caractérisé en ce**
**qu'**un diaphragme (32) présentant une section transversale (33) est disposé dans la section tubulaire (28), la section transversale (33) du diaphragme étant inférieure à la section transversale tubulaire (29).

10. Dispositif de transmission sonore suivant l'une des revendications précédentes,
**caractérisé en ce**
**que** des éléments d'amortissement sont disposés dans la partie conduite (18) et/ou dans la partie compartiment (19) et/ou dans le premier compartiment (26) et/ou dans le second compartiment (30) et/ou dans 1a section tubulaire (28).

11. Dispositif de transmission sonore suivant au moins la revendication 3,
**caractérisé en ce**
**que** la membrane (27) se compose d'un matériau à élasticité de caoutchouc et est fixée sur son pourtour sur la partie compartiment (19).

12. Dispositif de transmission sonore suivant au moins la revendication 3,
**caractérisé en ce**
**que** la membrane se compose d'un matériau relativement rigide et est tenue sur son pourtour par élasticité de ressort sur la partie compartiment (19).

13. Dispositif de transmission sonore suivant l'une des revendications précédentes,
**caractérisé en ce**
**que** le corps de transmission (12) est raccordé côté entrée à un côté épuré du circuit de d'aspiration (1) et que le corps de transmission (12) est fermé vers l'extérieur de façon étanche à l'air.
